## Europäisches Patentamt

(19) **European Patent Office**

**Office européen des brevets**

(11) Publication number: **0 110 525**
**B1**

(12) **EUROPEAN PATENT SPECIFICATION**

(45) Date of publication of patent specification: **07.01.87**

(51) Int. Cl.⁴: **B 08 B 3/02**

(21) Application number: **83306068.4**

(22) Date of filing: **06.10.83**

(54) **Improvements in washing/finishing machines for mechanical parts.**

(30) Priority: **16.11.82 ES 517663**

(43) Date of publication of application:
**13.06.84 Bulletin 84/24**

(45) Publication of the grant of the patent:
**07.01.87 Bulletin 87/02**

(84) Designated Contracting States:
**AT DE FR GB IT SE**

(56) References cited:
**FR-A-2 526 339**
**US-A-4 217 920**

(73) Proprietor: **Agullo Negui, Miguel**
**Balmes, 191**
**Barcelona (ES)**

(72) Inventor: **Agullo Negui, Miguel**
**Balmes, 191**
**Barcelona (ES)**

(74) Representative: **Bayliss, Geoffrey Cyril et al**
**BOULT, WADE & TENNANT 27 Furnival Street**
**London EC4A 1PQ (GB)**

Courier Press, Leamington Spa, England.

## Description

This invention relates to washing and/or finishing machines for mechanical parts, which machines include a transfer device for the parts to be washed and/or finished; at least one working chamber having a plurality of working stations for spray washing, sand spraying or de-burring of said parts, and indexing means for taking the parts successively from the transfer device and holding them in the different working stations in the working chamber. Such washing and/or finishing machines are acknowledged to be known from the general state of the art to which the invention relates.

In the production of parts in series, the initial plan of the production process has always been to define a priority for operations that must be done on difficult places of the parts and the time that each one of those operations must last. Any change of time, place or nature of the operation implied automatically changing tools changing parts of the machine or include additional devices. The operations in general were carried out in line, that is the transport system of parts is located inside the machine itself, and that in case of an incident, the whole line is shut-down.

In accordance with the present invention, the indexing means comprises at least one robot disposed outside of the working chamber and having a carrier which includes a clamping means for receiving the parts to be operated on and which is capable of extending through an aperture in the chamber into the chamber to enable the clamping means to support the parts in said working stations, the robot providing vertical, horizontal and rotary movement about a horizontal axis of the clamping means through said carrier, and closure means for the working chamber aperture being mounted on the robot, the carrier extending through the closure means and the closure means engaging over and closing the aperture when the carrier is extended into the working chamber, the closure means having means to seal with the carrier whilst permitting at least said rotary movement of the carrier.

The following is a description of a specific embodiment of the invention reference being made to the accompanying drawings in which:

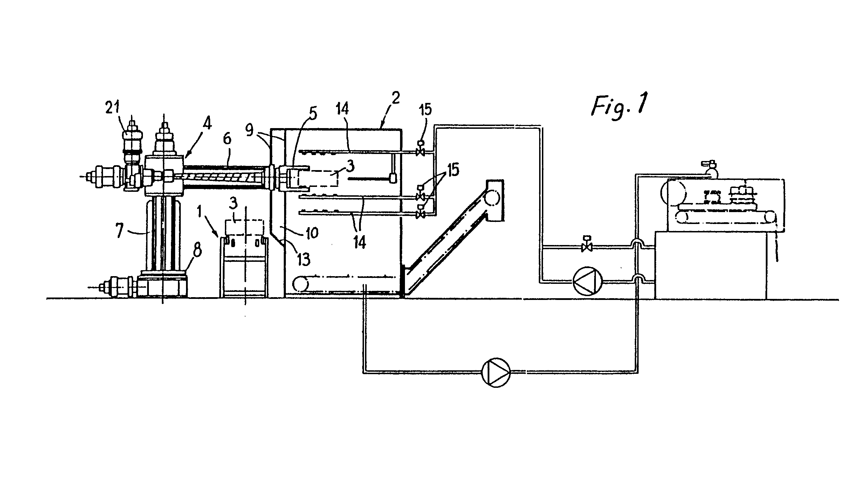

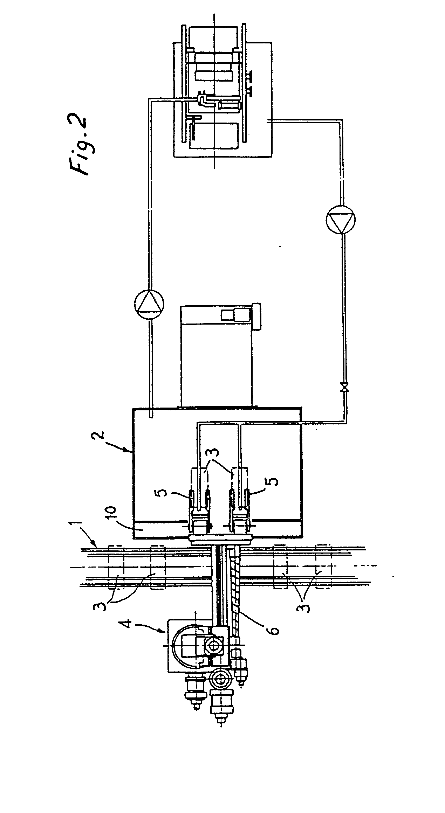

Figures 1 and 2 are a side view and a plan view of a machine embodying the improvements of the present invention;

the fig. 3 shows a cross section view and in detail of the extremity of the robot device;

the fig. 4 is a flat view similar to the fig. 2 but including a drying station;

the fig. 5 shows a perspective view, in an enlarged scale, of the opening to enter the robot arm inside the working cabinet and

the fig. 6 is a cross section view, showing the sealing system of the enter opening of fig. 5.

In those drawings it can be seen that a machine for washing and/or finishing the mechanical parts in accordance with the present invention, include a transfer device 1 for the parts that must be washed and/or finished, and also a working cabinet 2 and positioning devices that take the parts 3 in succession and place them in the different working stations.

Those positioning means are formed by at least one robot-device 4, that includes at least one clamping device, formed by a clamp 5 disposed at the extremity of an horizontal arm 6 having a longitudinal translation movement.

This horizontal arm 6 is mounted on a vertical column 7 that provides a vertical translation movement both upwardly and downwardly.

The vertical column 7 stands on an horizontal table 8 that can translate itself in a parallel direction to the advance direction of the part 3 on the transfer device 1.

This transfer device is constituted by a walking beam of the type described in European Patent Publication No. 0005336B.

The parts 3 are transferred by the walking beam 1 until they reach a position in front of the cabinet 2, and in this moment the arm 6 of the robot-device takes them by means of the clamping devices 5 and after, this arm 6 rises and extends to introduce the parts 3 inside the cabinet 2.

In this cabinet 2 there are disposed spraying manifolds 14 through which a wash or deburring liquid is delivered, that is, water, or water and abrasive mixture. Each manifold 14 is fed through an electrovalve 15.

Once the parts 3 are inside the cabinet 2, they are successively placed in front of the manifolds 14, each one of them operates when the corresponding part 3 is correctly placed in front of it, and in that moment the corresponding electrovalve 15 opens.

When all the succession of the operations done inside the cabinet 2 are finished, and all the electrovalves 15 are closed, the robot device places again the parts 3 on the walking beam 1, and then the latter advances placing new parts 3 in order to begin a new cycle.

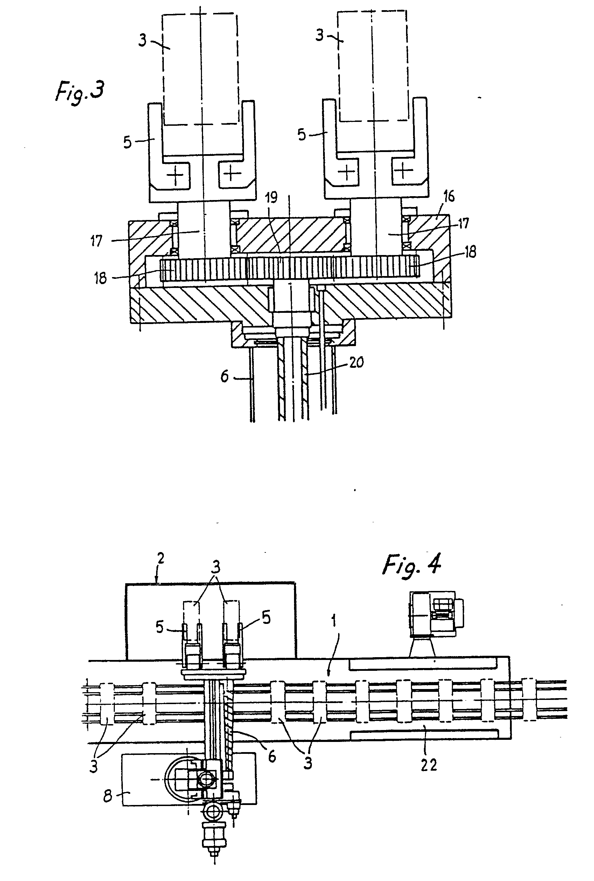

The fig. 3 illustrates the fitting of the parts 3 in the extremity of the arm 6 of the robot-device, in a way that several parts can be taken at the same time and give them the necessary rotating motion in order to present successively the faces of the parts 3 in front of the manifolds 14. The housing 16 is linked to the extremity of the arm 6 of the robot-device, and the clamps 5 rotate on the axles 17 that are driven by the gears 18 linked to the axle. The driving is made by means of another gear wheel 19, driven by the axle 20 that is driven by an independent motor 21, placed at the opposite extremity of the arm 6.

With all this it is possible to get a simultaneous rotation in the same direction and synchronized movement of the clamping devices 5, and in consequence of the parts 3.

It is obvious that this type of device can be applied also to three, four or more rotating clamping devices 5, increasing then the production.

This type of mechanics also permits that everything is enclosed inside a cabinet and that the motion element or motor is placed far away of the working area, that means that it is not inside the cabinet 2 and then it is not submitted to the heavy ambient conditions inside it.

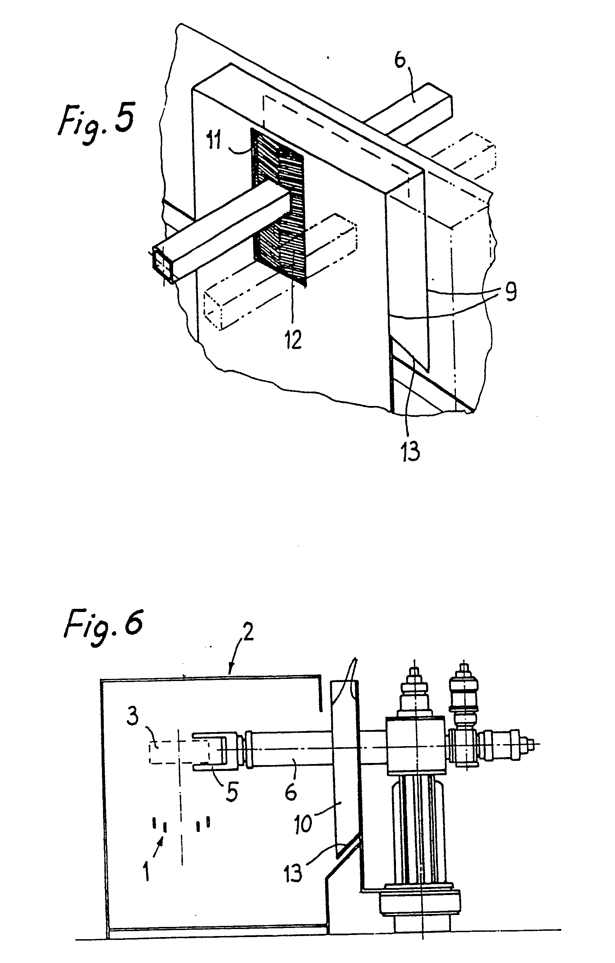

In the figs. 5 and 6 it can be seen that the sealing device provided for the penetration of the arm 6 of the robot-device when extended into the cabinet 2. The side wall of the working cabinet 2 is open and it is closed by means of a double wall 9 linked to the horizontal table 8 of the robot, and essentially perpendicular to the horizontal arm 6 of it, that defines a cavity 10 as a vestibule, destined to receive any splashing. An air exhaust device is placed in the vestibule 10 together with a separator of drops from the washing and/or finishing compound, not represented here.

In the centre of the double wall 9 described there is an opening 11 for the passing of the horizontal arm 6, this opening 11 being provided with vertical brush strips, having horizontally reaching hairs 12 pushing against the arm 6 and against themselves, closing the opening 11 in any position of the arm 6, to prevent any splashing passing to the outer side of the wall 9.

Also at the bottom of the vestibule cavity 10 there is a bottom slope 13 inclined to the inside of the working chamber 2, that communicates with it, in order to return all the splashing taken inside the cavity.

This device is very important in the case that, due to the high production rate, there is no time to translate the parts 3 to a cabinet 2 placed to one side of the walking beam and it is necessary to work above the transfer device itself. That means that, then, the walking beam 1 passes through the cabinet, and that the manifolds 14 are placed above the walking beam 1 and in consequence the horizontal movement of the robot is shorter, gaining production time.

Finally, in the fig. 4 there is shown a drying chamber 22 with hot air, through which the parts 3 cross once they are washed and/or finished and to where they arrive already drained, thanks to the described rotation motion of the parts 3 placed on the clamping devices 5 of the horizontal arm 6 which motion continues also during the extraction of the parts 3 from the working cabinet 2 in order to drain them.

**Claims**

1. A washing and/or finishing machine for mechanical parts, including a transfer device (1) for the parts to be washed and/or finished; at least one working chamber (2) having a plurality of working stations (14) for spray washing, sand spraying or de-burring of said parts, and indexing means (4) for taking the parts successively from the transfer device and holding them in the different working stations in the working chamber; characterised in that the indexing means comprise at least one robot (4) disposed outside of the working chamber and having a carrier (6) which includes a clamping means (5) for receiving the parts to be operated on and which is capable of extending through an aperture in the chamber into the chamber to enable the clamping means to support the parts in said working stations, the robot providing vertical, horizontal and rotary movement about a horizontal axis of the clamping means through said carrier, closure means (9) for the working chamber aperture being mounted on the robot, the carrier extending through the closure means and the closure means engaging over and closing the aperture when the carrier is extended into the working chamber, the closure means (12) having means to seal with the carrier whilst permitting at least said rotary movement of the carrier.

2. A washing and/or finishing machine as claimed in claim 1 characterised in that the carrier comprises a horizontal arm (6) and in that a plurality of clamping means (5) are mounted at one end of the arm.

3. A washing and/or finishing machine as claimed in claim 2, characterised in that the horizontal arm (16) is mounted on a vertical column (7) that provides a vertical translation movement in either direction.

4. A washing and/or finishing machine as claimed in claim 3, characterised in that the vertical column (7) stands on an horizontal table (8) that can move with a translation movement parallel to the direction of movement of the transfer system.

5. A washing and/or finishing machine as claimed in any of the preceding claims, characterised in that a number of clamping means (5) on the horizontal carrier (6) of the robot and means (18, 19, 20) are provided for effecting simultaneous rotating motion of the clamping devices at the same speed and sense, for use during the working time for washing and/or finishing the parts, inside the working chamber (2).

6. A washing and/or finishing machine as claimed in claim 5, characterised in that the means (18, 19, 20) for rotating the clamping means (5) is actuable during withdrawal of the clamping means from the working chamber to effect drainage of the parts supported thereon.

7. A washing and/or finishing machine as claimed in any of the preceding claims, characterised in that a side wall of the working chamber (2) has an opening which is closed by means of a double wall (9) linked to the horizontal table (8) of the robot device, and extending perpendicular to the horizontal arm (6) of the robot, the double wall providing a cavity like a vestibule, with the purpose of collecting any splashing, there being disposed in the vestibule an air exhaust device and a separator equipment for the wash and/or finishing compound droplets, the double wall having an opening (11) for the horizontal arm, this opening being provided of vertical brush strips (12) on either side thereof to push against themselves and against the arm, closing the opening in any position of the arm, preventing the splashing from going out of the chamber, and the lower part of the double wall having a bottom wall (13) with a slope down to the inside of the working chamber to communicate with it in order to return any liquid collecting thereon to the chamber.

## Patentansprüche

1. Vorrichtung zum Reinigen und/oder Nachbearbeiten von Werkstücken, mit einer Fortbewegungsvorrichtung für die zu reinigenden und/oder nachzubearbeitenden Werkstücke; mit mindestens einer Arbeitskammer (2) mit einer Mehrzahl von Arbeitsstationen (14) für das Sprühreinigen, Sandstrahlen oder Entgraten der Werkstücke, und mit einer Schaltvorrichtung (4), mit welcher die Werkstücke nacheinander von der Fortbewegungsvorrichtung genommen und in den verschiedenen Arbeitsstationen in der Arbeitskammer gehalten werden, dadurch gekennzeichnet, daß die Schaltvorrichtung mindestens einen Roboter (4) aufweist, der außerhalb der Arbeitskammer angeordnet ist und eine Tragvorrichtung (6) aufweist, die eine Klemmvorrichtung (5) für die Aufnahme von zu bearbeitenden Werkstücken enthält, welcher Tragarm sich durch eine Öffnung in der Arbeitskammer in die Arbeitskammer ausstrecken läßt, um zu ermöglichen, daß die Klemmvorrichtung die Werkstücke in den Arbeitsstationen abstützt, wobei der Roboter Vertikal-, Horizontal- und Drehbewegungen um eine horizontale Achse der Klemmvorrichtung über die Tragvorrichtung erlaubt, daß eine Verschließeinrichtung (9) für die Arbeitskammeröffnung auf dem Roboter befestigt ist, wobei sich die Tragvorrichtung durch die Verschließeinrichtung erstreckt und die Verschließeinrichtung an der Öffnung diese abschließend anliegt, wenn sich die Tragvorrichtung in die Arbeitskammer erstreckt, und daß die Verschließeinrichtung (9) eine Dichtvorrichtung (12) für die Abdichtung mit der Tragvorrichtung aufweist, während mindestens die Drehbewegung der Tragvorrichtung möglich ist.

2. Vorrichtung nach Anspruch 1, dadurch gekennzeichnet, daß die Tragvorrichtung einen horizontalen Tragarm (6) aufweist, und daß eine Mehrzahl von Klemmvorrichtungen (5) am einen Ende des Tragarmes gehalten sind.

3. Vorrichtung nach Anspruch 2, dadurch gekennzeichnet, daß der horizontale Tragarm auf einem vertikalen Ständer (7) gelagert ist, der eine translatorische Vertikalbewegung in jeder Richtung erlaubt.

4. Vorrichtung nach Anspruch 3, dadurch gekennzeichnet, daß der vertikale Ständer (7) auf einem horizontalen Tisch (8) steht, der sich translatorisch parallel zu der Bewegungsrichtung des Fortbewegungssystems bewegen kann.

5. Vorrichtung nach einem der vorhergehenden Ansprüche, dadurch gekennzeichnet, daß eine Anzahl von Klemmvorrichtungen (5) auf der horizontalen Tragvorrichtung (6) des Roboters vorgesehen ist und daß Bewegungsvorrichtungen (18, 19, 20) vorgesehen sind, mit welchen eine gleichzeitige Drehbewegung der Klemmvorrichtungen mit der gleichen Geschwindigkeit und Richtung für die Anwendung während der Arbeitszeit für das Reinigen und/oder Nachbearbeiten der Werkstücke in der Arbeitskammer (2) vorgesehen sind.

6. Vorrichtung nach Anspruch 5, dadurch gekennzeichnet, daß die Bewegungsvorrichtungen für das Drehen der Klemmvorrichtungen (5) während des Herausbewegens der Klemmvorrichtungen aus der Arbeitskammer betätigbar sind, um eine Trocknung der von diesen abgestützten Werkstücke zu bewirken.

7. Vorrichtung nach einem der vorhergehenden Ansprüche, dadurch gekennzeichnet, daß eine Seitenwand der Arbeitskammer eine Öffnung aufweist, die mit einer Doppelwandvorrichtung (9) verschlossen ist, die mit dem horizontalen Tisch (8) des Roboters verbunden ist und sich senkrecht zu dem horizontalen Tragarm (6) des Roboters erstreckt, daß die Doppelwandvorrichtung eine einer Vorkammer ähnliche Ausnehmung zur Sammlung von Spritzwasser aufweist, daß in der Vorkammer eine Luftaustrittsvorrichtung und eine Separiervorrichtung für Tröpfchen aus dem Reinigungs- und/oder Nachbearbeitungsmittel angeordnet ist, daß die Doppelwandvorrichtung eine Öffnung (11) für den horizontalen Tragarm aufweist, daß die Öffnung vertikale Bürstenstreifen (12) auf jeder Seite aufweist, die gegeneinander und gegen den Tragarm drücken können und die Öffnung in jeder Stellung des Armes schließen und das Spritzen aus der Arbeitskammer heraus verhindern, und daß der untere Teil der Doppelwandvorrichtung eine Bodenwand (13) mit einer Abwärtsneigung zum Inneren der Arbeitskammer hin aufweist, die mit dieser in Verbindung steht, um alle dort gesammelte Flüssigkeit zu der Arbeitskammer zurückzuleiten.

## Revendications

1. Machine de lavage et/ou de finition pour des pièces mécaniques, comportant un dispositif de transfert (1) pour les pièces à laver et/ou à finir; au moins une chambre de travail (2) comportant plusieurs postes de travail (14) pour un lavage par pulvérisation, un sablage ou un ébavurage desdites pièces, et un dispositif de présentation (4) pour prendre les pièces successivement dans le dispositif de transfert et pour les maintenir dans les différents postes de travail dans la chambre de travail; caractérisé en ce que le dispositif de présentation comprend au moins un robot (4) placé à l'extérieur de la chambre de travail et comportant un support (6) qui comporte un dispositif de blocage (5) pour recevoir les pièces à conditionner et qui est capable de passer par une ouverture ménagée dans la chambre pour pénétrer dans la chambre afin de permettre au dispositif de blocage de supporter les pièces dans lesdits postes de travail, le robot exécutant des mouvements vertical, horizontal et de rotation autour d'un axe horizontal du dispositif de blocage au travers dudit support, un moyen de fermeture (9) de l'ouverture de la chambre de travail qui est monté sur le robot, le support s'étendant au travers du moyen de fermeture et le moyen de fermeture s'engageant sur et fermant la fermeture quand le support est déployé dans la chambre de travail, le moyen de fermeture (12) comportant un moyen pour assurer l'étanchéité par rapport au support tout en permettant au moins ledit mouvement de rotation du support.

2. Machine de lavage et/ou de finition telle que revendiquée dans la revendication 1, caractérisée en ce que le support comprend un bras horizontal (6) et en ce que plusieurs dispositifs de blocage (5) sont montés à une extrémité du bras.

3. Machine de lavage et/ou de finition telle que revendiquée dans la revendication 2, caractérisée en ce que le bras horizontal (16) est monté sur une colonne verticale (7) qui exécute un mouvement de translation verticale dans l'une ou l'autre direction.

4. Machine de lavage et/ou de finition, telle que revendiquée dans la revendication 3, caractérisée en ce que la colonne verticale (7) est montée sur une table horizontale (8) qui peut exécuter un mouvement de translation parallèle à la direction de mouvement du système de transfert.

5. Machine de lavage et/ou de finition, telle que revendiquée dans l'une quelconque des revendications précédentes, caractérisée en ce qu'il est prévu un certain nombre de dispositifs de blocage (5) placés sur le support horizontal (6) du robot et des moyens (18, 19, 20) pour produire des mouvements simultanée de rotation des dispositifs de blocage à la même vitesse et dans le même sens, pour une utilisation pendant le temps de travail servant au lavage et/ou à la finition des pièces, à l'intérieur de la chambre de travail (2).

6. Machine de lavage et/ou de finition, telle que revendiquée dans la revendication 5, caractérisée en ce que les moyens (18, 19, 20) pour faire tourner le dispositif de blocage (5) peuvent être actionnés pendant le mouvement de sortie du dispositif de blocage hors de la chambre de travail afin d'assurer un drainage des pièces supportées par celui-ci.

7. Machine de lavage et/ou de finition, telle que revendiquée dans l'une quelconque des revendications précédentes, caractérisée en ce qu'une paroi latérale de la chambre de travail (2) comporte une ouverture qui est obturée au moyen d'une double paroi (9) montée de façon articulée sur latable horizontale (8) du robot et s'étendant perpendiculairement au bras horizontal (6) du robot, la double paroi formant une cavité analogue à un vestibule, dans le but de collecter des éclaboussures, en ce qu'il est prévu dans le vestibule un dispositif de décharge d'air et un équipement séparateur des gouttelettes de lavage et/ou des gouttelettes du composé de finition, la double paroi comportant une ouverture 11 pour le bras horizontal, cette ouverture comportant de chaque côté des bandes verticales (12) pourvues de brosses qui viennent s'appliquer l'une contre l'autre et contre le bras, en obturant l'ouverture dans n'importe quelle position du bras et en empêchant les éclaboussures de sortir de la chambre, tandis que la partie inférieure de la double paroi comporte une paroi de fond (13) pourvue d'une inclinaison dirigée vers le bas et vers l'intérieur de la chambre de travail de façon à communiquer avec elle pour que du liquide collecté sur ladite paroi soit renvoyé dans la chambre.

*Fig. 1*

Fig.2

Fig.3

Fig. 4

Fig. 5

11

6

12

9

13

Fig. 6

2

3

5

6

1

10

13